# EUROPEAN PATENT APPLICATION

(11) **EP 4 825 612 A1**
(43) Date of publication of application: **21.10.2026**
(21) Application number: 24903233.5
(22) Date of filing: 15.08.2024
(51) Int. Cl.: B60C 19/00, B60C 1/00, B60C 5/01

(54) **RFID PATCH AND TIRE**

(30) Priority: 12.12.2023 JP 2023209533
(71) Applicant: BRIDGESTONE CORPORATION, Chuo-ku Tokyo 104-8340 (JP)
(72) Inventor: KAMADA, Takehito, Tokyo 104-8340 (JP); SUKEGAWA, Shin, Tokyo 104-8340 (JP); ITO, Yujiro, Tokyo 104-8340 (JP); HOSHINO, Hironori, Tokyo 104-8340 (JP)
(74) Representative: Marks & Clerk LLP
(86) International application number: PCT/JP2024/029105
(87) International publication number: WO 2025/126570

(57) **Abstract**

There are provided an RFID patch and a tire, and the RFID patch includes: an RFID tag having an RFID chip, an antenna connected to the RFID chip, and a coating resin layer that covers the RFID chip and the antenna; and an adhesive layer having a thickness of 1 mm or more with which the RFID tag adheres to a bonding target object.

## Description

### Technical Field

The present disclosure relates to an RFID patch and a tire.

### Background Art

In recent years, there are demands for using thermoplastic resins, thermoplastic elastomers, or the like as tire materials from the viewpoint of weight reduction and ease of recycling, and tires using a resin material for a tire frame member are proposed. There are proposed tires obtained by attaching a radio frequency identification (RFID) tag including an RFID chip storing tire information or the like and a built-in antenna to the tires using the resin material for such a tire frame member (for example, see Japanese Patent Application Laid-Open (JP-A) No. 2023-087596 and Japanese Patent Application Laid-Open (JP-A) No. 2023-087597).

### SUMMARY OF INVENTION

### Technical Problem

It is conceivable that an adhesive layer is added to the RFID tag to form an RFID patch, and the RFID patch is bonded to a completed tire. However, when the RFID patch is bonded to the tire and driving is performed, the RFID patch may peel off from the tire due to vibration, deformation, or the like of the tire.

An object of the disclosure is to provide an RFID patch that is less likely to peel off when bonded to a tire.

### Solution to Problem

An RFID patch of a first aspect includes: an RFID tag having an RFID chip, an antenna connected to the RFID chip, and a coating resin layer that covers the RFID chip and the antenna; and an adhesive layer having a thickness of 1 mm or more with which the RFID tag adheres to a bonding target object.

In the RFID patch of the first aspect, since the adhesive layer has the thickness of 1 mm or more, an effect of vibration, deformation, or the like of the tire can be alleviated in the adhesive layer when the RFID patch is bonded to the tire. Therefore, when the RFID patch is bonded to the tire, the RFID patch is less likely to peel off.

According to an RFID patch of a second aspect, in the RFID patch of the first aspect, the thickness of the adhesive layer is 25% or more of a total thickness.

In the RFID patch of the second aspect, since the thickness of the adhesive layer is 25% or more of the total thickness, the effect of vibration, deformation, or the like of the tire can be alleviated in the adhesive layer when the RFID patch is bonded to the tire. Therefore, when the RFID patch is bonded to the tire, the RFID patch is less likely to peel off.

According to an RFID patch of a third aspect, in the RFID patch of the first or second aspect, the adhesive layer is lower in hardness than the coating resin layer.

In the RFID patch of the third aspect, since the adhesive layer has the hardness lower than that of the coating resin layer, the effect of vibration, deformation, or the like of the tire can be alleviated in the adhesive layer when the RFID patch is bonded to the tire. Therefore, when the RFID patch is bonded to the tire, the RFID patch is less likely to peel off.

According to an RFID patch of a fourth aspect, in the RFID patch of any one of the first to third aspects, the adhesive layer includes, in order from the coating resin layer side, a first adhesive layer having adhesiveness at both surfaces of a front surface and a back surface, a buffer layer having a buffering property, and a second adhesive layer having adhesiveness at both surfaces of a front surface and a back surface.

In the RFID patch of the fourth aspect, since the adhesive layer includes the first adhesive layer, the buffer layer having the buffering property, and the second adhesive layer, the buffer layer can be made of a material that does not have adhesiveness. Therefore, a degree of freedom in selecting a material of the buffer layer can be increased.

According to an RFID patch of a fifth aspect, in the RFID patch of any one of the first to third aspects, the adhesive layer is formed by a single layer having a buffering property and adhesiveness.

In the RFID patch of the fifth aspect, since the adhesive layer is formed by a single layer having a buffering property and adhesiveness, a configuration of the RFID patch can be simplified.

A tire of a sixth aspect includes a frame member made of a resin material, and the RFID patch according to any one of the first to fifth aspects is bonded to the tire.

In the tire of the sixth aspect, since the RFID patch of any one of the first to fifth aspects is bonded to the tire, the RFID patch is less likely to peel off.

### Advantageous Effects of Invention

As described above, according to the RFID patch and the tire of the disclosure, the RFID patch bonded to the tire can be less likely to peel off.

### BRIEF DESCRIPTION OF DRAWINGS

Fig. 1 is a perspective view of a partially cross-sectioned tire according to an embodiment of the disclosure.
Fig. 2 is a cross-sectional view along a tire rotation axis of the tire according to the embodiment of the disclosure.
Fig. 3 is a plan view of an RFID patch according to the embodiment of the disclosure.
Fig. 4 is a side view of the RFID patch according to the embodiment of the disclosure.
Fig. 5 is a side view of an RFID patch according to another embodiment of the disclosure.

### DESCRIPTION OF EMBODIMENTS

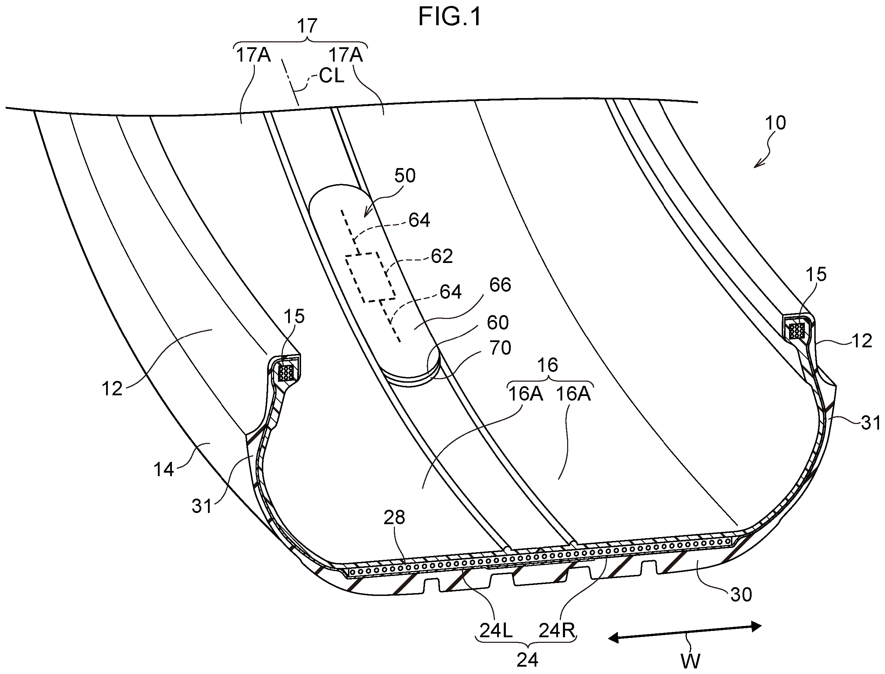

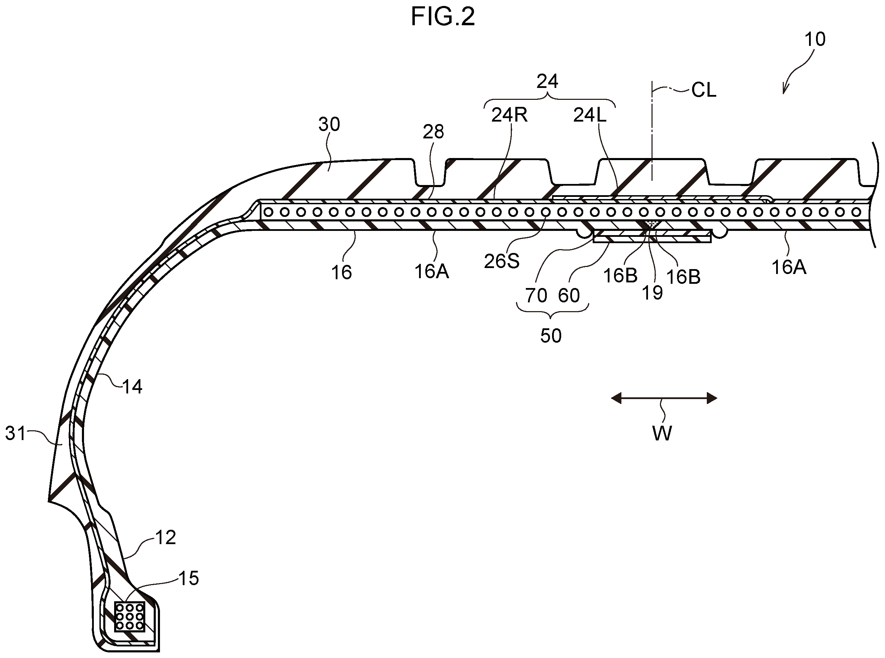

A tire 10 according to an embodiment of the disclosure will be described with reference to Figs. 1 to 4. In the drawings, the same or substantially equivalent elements, members, and parts are denoted by the same reference numerals. Dimensions and ratios in the drawings are exaggerated for convenience of description and may be different from actual ratios. In the cross-sectional view of Fig. 2, an internal structure of an RFID tag 60 and an adhesive layer 70 of an RFID patch 50 is not illustrated.

### (Tire Configuration)

The tire 10 of the embodiment shown in Figs. 1 and 2 is a pneumatic tire used by filling an inside thereof with air. The tire 10 includes a tire frame member 17. The tire frame member 17 includes a pair of bead portions 12, side portions 14 extending outward in a tire radial direction from the bead portions 12, respectively, and a crown portion 16 connecting outer ends of the respective side portions 14 in the tire radial direction.

The tire frame member 17 includes a pair of annular tire frame half bodies 17A having the same shape in which one bead portion 12, one side portion 14, and a half-width crown half portion 16A are integrally molded. A distal end 16B of the crown half portion 16A has a tapered shape on a tire equatorial plane CL side.

The pair of tire frame half bodies 17A abut each other at the distal ends 16B of the crown half portions 16A, are joined at the tire equatorial plane CL part, and form the tire frame member 17. A welding thermoplastic material 19 is used for the joining at the tire equatorial plane CL part.

A tread portion 30 constituting a tire tread which is a ground contact part of the tire is located on an outer side of the crown portion 16 in the tire radial direction.

The tire frame member 17 is made of a resin material. The resin material herein does not contain vulcanized rubber. Examples of the resin material include thermoplastic resins (including thermoplastic elastomers), thermosetting resins, and other general-purpose resins, as well as engineering plastics (including super engineering plastics).

The thermoplastic resins (including thermoplastic elastomers) refer to polymer compounds that make the material soften and flow with an increase in temperature and become relatively hard and have strength when cooled. In this specification, among the polymer compounds, a polymer compound that makes the material soften and flow with an increase in temperature, becomes relatively hard and has strength when cooled, and has rubber-like elasticity is distinguished as a thermoplastic elastomer, and a polymer compound that makes the material soften and flow with an increase in temperature, becomes relatively hard and has strength when cooled, and does not have rubber-like elasticity is distinguished as a thermoplastic resin that is not an elastomer.

Examples of the thermoplastic resins (including thermoplastic elastomers) include a polyolefin-based thermoplastic elastomer (TPO), a polystyrene-based thermoplastic elastomer (TPS), a polyamide-based thermoplastic elastomer (TPA), a polyurethane-based thermoplastic elastomer (TPU), a polyester-based thermoplastic elastomer (TPC), and a dynamically crosslinked thermoplastic elastomer (TPV), and a polyolefin-based thermoplastic resin, a polystyrene-based thermoplastic resin, a polyamide-based thermoplastic resin, and a polyester-based thermoplastic resin.

As the thermoplastic material, for example, a material having a deflection temperature under load (under a load of 0.45 MPa) of 78°C or higher, which is defined in ISO 75-2 or ASTM D648, the tensile yield strength of 10 MPa or more, which is defined in JIS K 7113, and tensile fracture elongation (JIS K 7113) of 50% or more, which is defined in JIS K7113, and the Vicat softening temperature (A method) of 130°C, which is defined in JIS K 7206, can be used.

The thermosetting resins refer to polymer compounds that form a three-dimensional network structure with an increase in temperature and are cured. Examples of the thermosetting resins include a phenolic resin, an epoxy resin, a melamine resin, and a urea resin.

As the resin material, in addition to the thermoplastic resins (including thermoplastic elastomers) and the thermosetting resins described above, a general-purpose resin such as a (meth)acrylic resin, an EVA resin, a vinyl chloride resin, a fluorine-based resin, or a siliconebased resin may be used.

In the embodiment, a case in which the tire frame member 17 is made of a thermoplastic resin will be described.

The tire frame half body 17A made of the thermoplastic material can be molded by, for example, vacuum molding, pressure molding, injection molding, melt casting, or the like. Here, as compared with the case of molding (vulcanizing) with rubber, manufacturing steps can be significantly simplified, and the molding time can be shortened.

The tire frame member 17 may be made of a single thermoplastic material or may be made of a thermoplastic material having different characteristics for each portion (the side portion 14, the crown portion 16, the bead portion 12, or the like) of the tire frame member 17, similarly to a conventional pneumatic rubber tire.

An annular bead core 15 is embedded in the bead portion 12 of the tire frame member 17. The bead core 15 is formed by a steel cord, similarly to a conventional general pneumatic tire. The bead core 15 may be omitted as long as rigidity of the bead portion 12 is secured and no problem arises in fitting in a rim (not shown). The bead core 15 may be formed by a cord other than the steel cord, such as an organic fiber cord or a cord obtained by coating an organic fiber with a resin, and furthermore, the bead core 15 may be made of a hard resin by injection molding or the like instead of the cord.

The crown portion 16 of the tire frame member 17 has a cord reinforcement layer 28 including a helically wound steel cord 26S. The cord reinforcement layer 28 corresponds to a belt located on an outer circumferential surface of a carcass of the conventional pneumatic rubber tire.

In the tire frame member 17, a coating layer 24 is formed from the bead portion 12 to an outer side of the crown portion 16 in a tire axial direction W. An end portion of the coating layer 24 on the bead portion 12 side is located on an inner side of the tire with respect to a close contact portion with the rim (not shown) of the bead portion 12. The coating layer 24 of the embodiment includes a first coating layer 24R extending from one bead portion 12 to a position slightly exceeding the tire equatorial plane CL, and a second coating layer 24L that extends from the other bead portion 12 to a position slightly exceeding the tire equatorial plane CL and overlaps the first coating layer 24R on the tire equatorial plane CL.

The first coating layer 24R and the second coating layer 24L have a configuration in which a reinforcement member is coated with a resin material. As the resin material, for example, the same resin material as that of the tire frame member 17 is used. One surface or both surfaces of the reinforcement member may be coated with the resin material. In a case in which both the surfaces of the reinforcement member are coated with the resin material, the reinforcement member can be located at a center of the first coating layer 24R and the second coating layer 24L in a thickness direction thereof. In the case of coating both the surfaces, different resin materials may be used for one surface and the other surface, respectively.

The reinforcement member is, for example, a twisted cord or an aggregate of a plurality of filaments. A material of the reinforcement member is, for example, aliphatic polyamide, polyethylene terephthalate, glass, aramid, or metal such as steel. In the first coating layer 24R and the second coating layer 24L, the reinforcement member extends at least along the tire radial direction. A reinforcement member extending in a tire circumferential direction may be combined with the reinforcement member, and the reinforcement members may overlap to intersect each other. In this case, the reinforcement member may be woven or knitted in a cloth form. The reinforcement member may be inclined with respect to the tire radial direction or the tire circumferential direction.

The tread portion 30 is located on an outer side of the coating layer 24 on an outer side of the tire frame member 17 in the tire radial direction, and a side member 31 is located on an outer side of the coating layer 24 on the outer side of the tire frame member 17 in the tire width direction.

The tread portion 30 constitutes a tire tread which is a ground contact portion of the tire 10.

The tread portion 30 is made of rubber having abrasion resistance better than that of the thermoplastic resin of the tire frame member 17. As the rubber used in the tread portion 30, the same type of rubber as rubber used for the conventional pneumatic rubber tire can be used. As the tread portion 30, a tread portion made of another type of thermoplastic resin having abrasion resistance better than that of the thermoplastic resin of the side portion 14 may be used.

The side member 31 can be made of the same type of rubber as rubber used for the conventional pneumatic rubber tire.

### (RFID Patch)

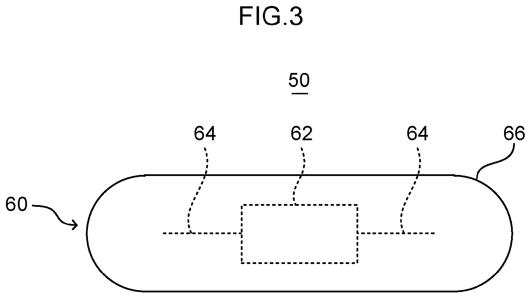

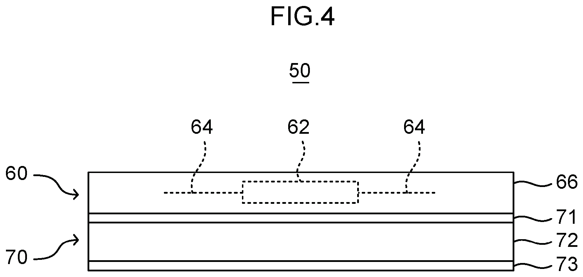

The RFID patch 50 of the embodiment shown in Figs. 3 and 4 includes the RFID tag 60 having an RFID chip 62, an antenna 64 connected to the RFID chip 62, and a coating resin layer 66 which covers the RFID chip 62 and the antenna 64, and the adhesive layer 70 having a thickness of 1 mm or more with which the RFID tag 60 adheres to the tire 10 that is a bonding target object.

The RFID patch 50 is configured to be bondable to the tire 10 by the adhesive layer 70 in order to attach the RFID tag 60 to the completed tire 10 afterwards. The RFID patch 50 has flexibility and is configured to be deformable according to deformation of the tire 10.

The RFID tag 60 is a wireless tag having a function of performing wireless communication by transmitting and receiving radio waves via the antenna 64, can receive radio waves issued by a reader, and can wirelessly transmit information recorded in the RFID chip 62.

As the resin material of the coating resin layer 66, the same type of resin material as the thermoplastic resin of the cord reinforcement layer 28 is preferably used.

The adhesive layer 70 is formed to have a thickness of 1 mm or more and has a buffering property and adhesiveness. The adhesive layer 70 of the embodiment includes, in order from the RFID tag 60 side, a first adhesive layer 71 having adhesiveness at both surfaces of a front surface and a back surface thereof, a buffer layer 72 having a buffering property, and a second adhesive layer 73 having adhesiveness at both surfaces of a front surface and a back surface thereof.

The first adhesive layer 71 and the second adhesive layer 73 can be formed by using a double-sided tape having a base material such as paper or cellophane, a double-sided tape having no base material, an adhesive application layer, or the like.

The buffer layer 72 can be made of rubber, sponge, or the like.

A thickness of the adhesive layer 70 is preferably 25% or more of a total thickness of the RFID patch 50. The thickness of the adhesive layer 70 is more preferably 40% or more of the total thickness of the RFID patch 50. The adhesive layer 70 is preferably lower in hardness than the coating resin layer. In the embodiment, the thickness of the adhesive layer 70 is 25% or more of the total thickness of the RFID patch 50, and the adhesive layer 70 is lower in hardness than the coating resin layer 66.

The RFID patch 50 of the embodiment is bonded at a central position in the tire axial direction W of an inner circumferential surface of the tire frame member 17 in a state where a longitudinal direction of the RFID patch 50 is oriented to the tire circumferential direction.

### (Operations and Effects)

In the RFID patch 50 of the embodiment, since the thickness of the adhesive layer 70 is 1 mm or more, an effect of vibration, deformation, or the like of the tire 10 can be alleviated in the adhesive layer 70 when the RFID patch 50 is bonded to the tire 10. Therefore, when the RFID patch 50 is bonded to the tire 10, the RFID patch 50 is less likely to peel off.

In the RFID patch 50 of the embodiment, since the thickness of the adhesive layer 70 is 25% or more of the total thickness, an effect of vibration, deformation, or the like of the tire 10 can be alleviated in the adhesive layer 70 when the RFID patch 50 is bonded to the tire 10. Therefore, when the RFID patch 50 is bonded to the tire 10, the RFID patch 50 is less likely to peel off.

In the RFID patch 50 of the embodiment, since the adhesive layer 70 is lower in hardness than the coating resin layer 66, an effect of vibration, deformation, or the like of the tire 10 can be alleviated in the adhesive layer 70 when the RFID patch 50 is bonded to the tire 10. Therefore, when the RFID patch 50 is bonded to the tire 10, the RFID patch 50 is less likely to peel off.

In the RFID patch 50 of the embodiment, since the adhesive layer 70 includes the first adhesive layer 71, the buffer layer 72 having the buffering property, and the second adhesive layer 73, the buffer layer 72 can be made of a material that does not have adhesiveness. Therefore, a degree of freedom in selecting a material of the buffer layer 72 can be increased.

### [Other Embodiments]

One embodiment of a technology of the disclosure has been described above; however, the technology of the disclosure is not limited to the above description, and it is needless to say that, in addition to the above-described embodiment, various modifications thereof can be implemented without departing from the gist of the disclosure.

For example, in the above-described embodiment, the RFID patch 50 is bonded to the tire 10 in a state where the longitudinal direction of the RFID patch 50 is oriented to the tire circumferential direction, and the RFID patch 50 may be bonded to the tire 10 in a state where the longitudinal direction of the RFID patch 50 is inclined with respect to the tire circumferential direction, or the RFID patch 50 may be bonded to the tire 10 in a state where the longitudinal direction is oriented to the tire width direction.

In the above-described embodiment, the RFID patch 50 is bonded to the crown portion 16 on the inner circumferential surface of the tire frame member 17 and may be bonded to the side portion 14.

In the embodiment, the RFID tag 60 of the RFID patch 50 includes the RFID chip 62, the antenna 64, and the coating resin layer 66, and another member or layer may be added further.

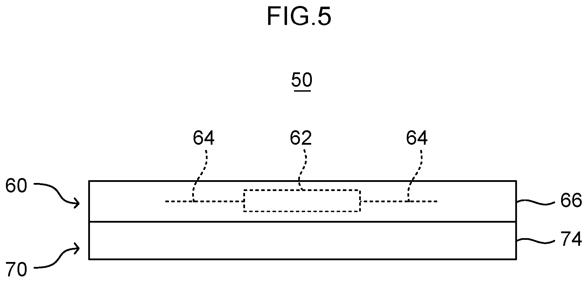

In the above-described embodiment, the adhesive layer 70 of the RFID patch 50 includes the first adhesive layer 71, the buffer layer 72 having a buffering property, and the second adhesive layer 73. However, as shown in Fig. 5, the adhesive layer may include a single buffer adhesive layer 74 having a buffering property and adhesiveness. As the buffer adhesive layer 74 having a buffering property and adhesiveness, for example, butyl rubber or the like can be used.

In the above-described embodiment, the tire frame member 17 is made of a resin material, and the tire frame member 17 may be a tire frame (tire case) of the conventional pneumatic tire including a carcass obtained by coating a cord with rubber, a rubber inner liner, a rubber bead filler, and the like.

The entire disclosure of Japanese Patent Application No. 2023-209533 filed on December 12, 2023 is incorporated herein by reference. All of the literature, patent applications, and technical standards described in this specification are incorporated herein by reference, to the same extent as a case in which individual literatures, patent applications, and technical standards were specifically and individually indicated to be incorporated by reference.

## Claims

1. An RFID patch comprising:
an RFID tag having an RFID chip, an antenna connected to the RFID chip, and a coating resin layer that covers the RFID chip and the antenna; and
an adhesive layer having a thickness of 1 mm or more with which the RFID tag adheres to a bonding target object.

2. The RFID patch according to claim 1,
wherein the thickness of the adhesive layer is 25% or more of a total thickness.

3. The RFID patch according to claim 1,
wherein the adhesive layer is lower in hardness than the coating resin layer.

4. The RFID patch according to claim 1,
wherein the adhesive layer includes,
in order from the coating resin layer side,
a first adhesive layer having adhesiveness at both surfaces of a front surface and a back surface,
a buffer layer having a buffering property, and
a second adhesive layer having adhesiveness at both surfaces of a front surface and a back surface.

5. The RFID patch according to claim 1,
wherein the adhesive layer is formed by a single layer having a buffering property and adhesiveness.

6. A tire comprising
a frame member made of a resin material,
wherein the RFID patch according to any one of claims 1 to 5 is bonded to the tire.
